(19)

Europäisches
Patentamt

European
Patent Office

Office européen
des brevets

(11) **EP 2 684 753 B1**

(12) **EUROPEAN PATENT SPECIFICATION**

(45) Date of publication and mention
of the grant of the patent:
**08.04.2015 Bulletin 2015/15**

(51) Int Cl.:
***B60T 8/172*** *(2006.01)*       ***B60T 8/1755*** *(2006.01)*

(21) Application number: **12176021.9**

(22) Date of filing: **11.07.2012**

(54) **Method for estimating a vehicle's sideslip angle**

Verfahren zur Schätzung eines Fahrzeugschwimmwinkels

Procédé d'estimation d'un angle de dérapage du véhicule

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**15.01.2014 Bulletin 2014/03**

(73) Proprietor: **KNORR-BREMSE Systeme für
Nutzfahrzeuge GmbH
80809 München (DE)**

(72) Inventors:
• **Kovács, Roland
1044 Budapest (HU)**
• **Palkovics, Laszlo
1111 Budapest (HU)**
• **Hankovszki, Zoltan
7400 Kaposvar (HU)**

(74) Representative: **Schönmann, Kurt
c/o Knorr-Bremse AG
Patentabteilung V/RG
Moosacher Str. 80
80809 München (DE)**

(56) References cited:
**GB-A- 2 461 551          US-A1- 2002 143 451
US-A1- 2003 093 190     US-B1- 6 547 343**

EP 2 684 753 B1

**Description**

The present invention relates to an estimation method, which is capable to estimate a vehicle's, or, in vehicle trailer combination having a tractor vehicle and a trailer, a towing vehicle's sideslip according to claim 1.

State of the art

A vehicle's side slip angle can be measured in laboratory environment. But in series product, the necessary sensor techniques aren't realizable due to their high costs. Furthermore if these values would be known then a lot of new ways of vehicle stability improvement could be realized. Examples are active steering solutions or for directional control sideslip control instead of yaw rate control. In case of sideslip control it could be reached that the vehicle velocity's direction will be always in a tight range with respect to the vehicle's longitudinal plane, so the driver always will see the vehicle's trajectory in front of themselves. In this way an average driver is capable to control the driven vehicle.

An example of yaw rate based directional control is DE 10 2005 060 820 A1. It denominates a lateral guidance control system, which uses for its control only yaw rate and lateral acceleration as references. For these control reference models setups are needed and some hazardous situation will be undetected because it is possible that right yaw rate and lateral acceleration values could be measured during a vehicle skid. With a sideslip based directional control no reference model is needed, the sideslip angle should simply be kept under 5° for example in case of high velocities.

The nowadays commonly used sensors for vehicle stability control functions are wheel speed sensors, steering wheel angle sensor, yaw rate sensor and lateral acceleration sensor. These velocity, position, angular velocity and acceleration sensor techniques are widely used and cheaply manufactured. An accurate enough real time capable sideslip sensing unit is approximately hundred times more expensive as these sensors and for example on snowy surface it is not able to operate.

Efforts are made to attain estimation methods which use the signals of the mentioned cheap sensors as input signals and estimate the other hardly measurable physical quantities. In case of commercial vehicles, yaw rate sensor and lateral acceleration sensor are mounted on the vehicle's frame (often in one integrated unit), but the signal of the yaw rate sensor is not as strongly influenced by frame roll as the signal of the lateral acceleration sensor. And what is more, the degree of this influence changes together with payload, and it is nonlinear. After all, commercial vehicle's measured lateral acceleration signal contains significant frame roll dynamics effects that are not wanted for an estimation method. Furthermore, this results also that real lateral acceleration signal of the vehicle, which is parallel to road surface, is not known - but it can be also estimated.

DE 103 38 879 A1 predicts the possible highest reached lateral acceleration with respect to steering angle and vehicle velocity or with the using of a previously set up lookup table, anyway these methods suppose some vehicle and surface conditions, which couldn't been guaranteed in every case.

US 2002 143 451 discloses a method for estimating a vehicle slip angle using an iterative non linear closed loop observer.

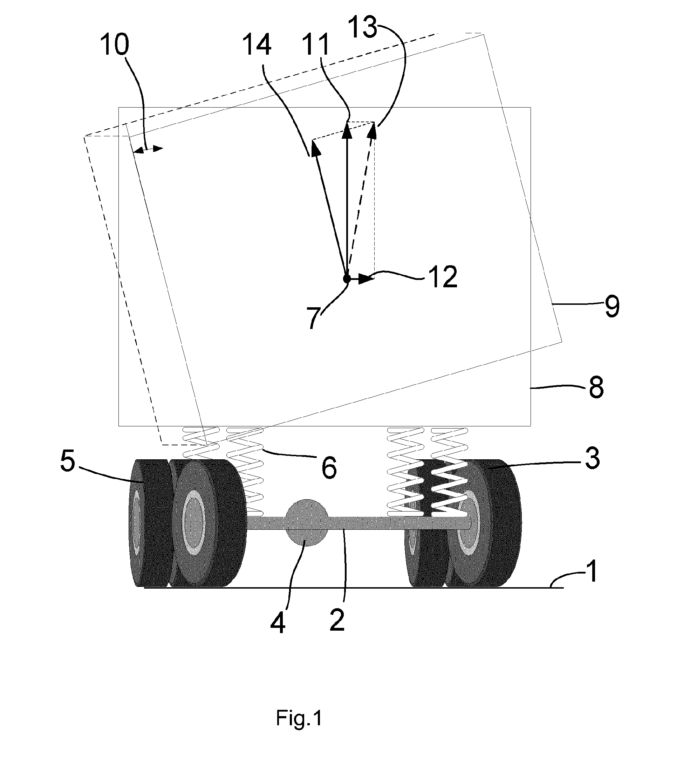

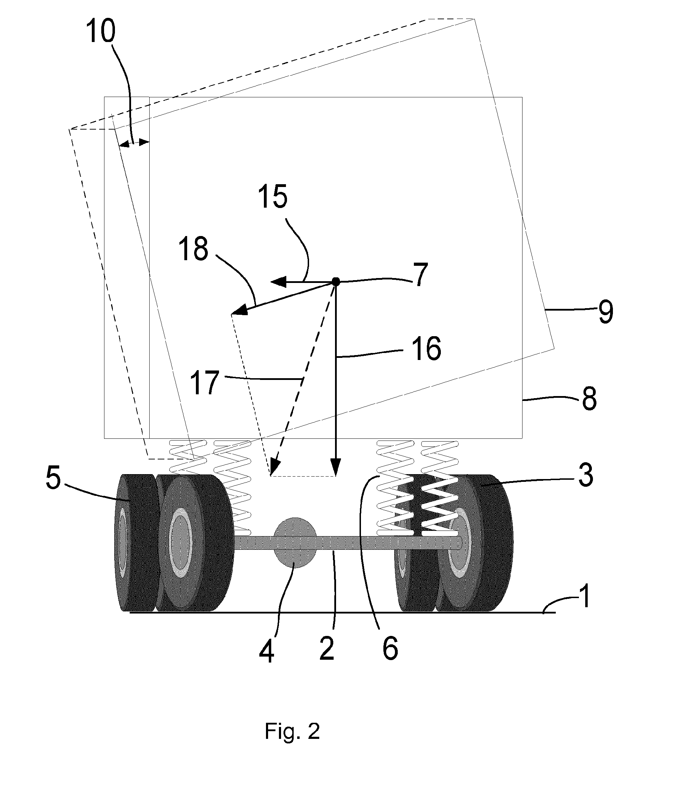

As already mentioned above, particularly with respect to commercial vehicles there is the problem, that the yaw rate sensor and the lateral acceleration sensor move together with the vehicle frame in general and this can cause significant lateral acceleration measurement errors. Another problem is that the commercial vehicle's state is often unknown. The payload could be even more than double of the vehicle's empty mass. This heavily influences the vehicle's inertia, load distribution, the centre of gravity's position and roll dynamics - see Figs. 1 and 2 how these parameters can influence the measuring accuracy of lateral acceleration and yaw rate sensors that are typically mounted on a vehicle's frame. Furthermore, the influence of these parameters often varies even during a trip (e.g. water truck). Axle pairs or even three or more axle groups are also in use, and strongly nonlinear tire characteristics could be easily reached mainly because of the high centre of gravity point.

Fig.1 showing a perspective view of a commercial vehicle when cornering, with indication of parameters to measure the yaw rate, Fig.2 showing a perspective view of a commercial vehicle when cornering, with indication of parameters to measure the lateral acceleration. A considerable problem consists in frame roll, because lateral acceleration and yaw rate sensors roll together with the frame. It means that if the roll angle is $\varphi$, pitch angle is $\chi$, yaw angle is $\psi$ and time is $t$ (and d is the operand of derivation), then the yaw rate sensor will measure:

$$(d\psi/dt)_{measured}=(d\psi/dt)*cos(\varphi)+(d\chi/dt)*sin\ (\varphi)$$

The $cos(\varphi)$ function's value is approximately 1 in the considerable frame roll zone (up to about $\pm20°$), $sin(\varphi)$ function's value is approximately $\varphi$ in radians in the same zone. In other words the following could be said (20° is 0.349rad):

$$(d\psi/dt)_{measured}\approx(d\psi/dt)+(d\chi/dt)^*\varphi$$

The frame's pitch rate is negligible because the frame's pitching way is relative tight, so the frame can realize pitch rate only for a short time with a small magnitude. In this way the measured yaw rate is equal to the realized yaw rate in parallel with the road surface with a good approximation:

$$(d\psi/dt)_{measured}\approx(d\psi/dt)$$

Fig. 1 depicts the following things: there are ground 1, front axle 2 with tires 3, rear axle 4 with tires 5, springs 6 between the main frame and axles, centre of the gravity 7 of the main frame in standstill 8, the main frame during cornering 9, roll angle between the two positions 10, yaw rate 11 ($d\psi/dt$), pitch rate 12 ($d\chi/dt$), the resultant of the previous two vectors 13, and measured yaw rate 14 ($(d\psi/dt)_{measured}$).

In case of lateral acceleration, the frame roll results that the gravitational acceleration will be merged into the measured lateral acceleration, namely if the gravitational acceleration is $G$ and the lateral acceleration is $a_{lat}$:

$$(a_{lat})_{measured}=a_{lat}{}^*cos(\varphi)+G^*sin(\varphi)$$

The gravitational acceleration is about 9.81m/s$^2$, and a commercial vehicle's rollover limit is about 4-5m/s$^2$. It means that if the previous prove will be accepted again, then the measured lateral acceleration is equal to:

$$(a_{lat})_{measured}=a_{lat}+G^*\varphi= a_{lat}+9.81^*\varphi$$

In this way the measured lateral acceleration will contain a significant deformation caused by gravitation acceleration and high frame roll angle.

Fig.2 marks the following further things with reference numerals: There is lateral acceleration ($a_{lat}$) 15, gravitational acceleration ($G$) 16, the resultant of previous two vectors 17 and measured lateral acceleration ($(a_{lat})_{measured}$) 18.

Thus, Fig. 1 and Fig. 2 showing yaw rate and lateral acceleration sensors problems in case of commercial vehicles. They are mounted on the same place and roll together with the vehicle frame. Nevertheless only lateral acceleration sensor's measured signal is so significantly influenced by frame roll that its using effectiveness for a vehicle sideslip angle estimation method is strongly limited. Thus the estimation of the original lateral acceleration parallel to road surface can be also performed.

It is the aim of the invention, to provide a method for estimating side slip angle of a vehicle, being suitable for every possible vehicle load cases, tire types and particularly for commercial vehicles. The estimated sideslip value shouldn't be instable, oscillations and drifts are not allowed - resets are suggested. It is a further aim, to run a continuous vehicle sideslip estimation which doesn't have cumulative errors, phase delays and significant differences between the real and estimated values characteristics.

Disclosure of the invention

The presented method provides an estimation of a vehicle's sideslip angle on the basis of the following vehicle parameters: Axle distance, track width, rolling tire radius and steering wheel angle - steered wheel angle function table as parameter. If a vehicle has more than two axles, than two axle groups should be set up. The weighted middle of the axle groups can be considered. The weighting is based on nominal axle loads for example. Axle lifting can also be considered, if not then it reduces the accuracy. If one or more steered axle could be found in an axle group then their steering angles can be summarized and weighted in the same way. From the estimated vehicle sideslip angle lateral vehicle velocity and lateral acceleration parallel to road surface can be easily calculated as additional functions, see Fig. 2 and its above description to see why is important in this case to mention "parallel to road surface" and what is the generally measured value.

The presented method then provides a sideslip estimation on the basis of the following measured signals: Longitudinal vehicle velocity (gathered for instance from a further onboard electronic control unit), steering wheel angle or steering wheel angles if more steered axles are installed and yaw rate. The measured signals are gathered from the towing vehicle in case of a vehicle combination.

Further, on the basis of the estimated side slip angle the lateral velocity and the lateral acceleration parallel to road surface can be estimated.

With these vehicle parameters and measured signals the estimation makes two iterations in every processing step.

First, the vehicle sideslip angle's derivative $\beta_{guess}$ is iterated (first iteration), then a mass specific cornering stiffness parameter $c_{estimated}$ is iterated (second iteration). A processing step is made by the vehicle's onboard computer in real time. Between the iterations a regulation method is performed. This method contains constrains based on physical laws. These constraints correct the first iteration's result and the output of them gives the base of the second iteration.

The result of the second iteration is fed back to the next processing step, as an initial input. The first iteration makes a guess about the vehicle sideslip angle's actual value. This guess is modified by regulations: The first regulation sets kinematic limits for the vehicle sideslip angle. From this, maximum or minimum values can be calculated for actual vehicle sideslip angle. Further requirement is that vehicle sideslip angle must be continuous, so calculated maximum and minimum values mustn't cause break of continuity.

Example equations of the first iteration, regulation method and second iteration can be seen in table 1 in case of a two axle vehicle.

Table 1: Equations of the first iteration, regulation and second iteration and additional calculations.

| | Equation |
|---|---|
| First iteration | $\Delta\beta_{guess}[k]=(c_{estimated}[k-1]*\alpha_1*L-\Delta^2\psi[k]/T^2*I_{ZM})/v_{long}[k]/L_2*T-\Delta\psi[k],$ where $\alpha_1=(\delta_1[k]-arctan(tan(\beta_{estimated}[k-1])+\Delta\psi[k]/T*L_1/v_{long}[k]))*cos(\delta_1[k])$ |
| Regulation | $\beta_{estimated}[k]=min(max(\beta_{guess}[k],B_{max}),B_{min})$ where $\beta_{guess}[k]=\beta_{estimated}[k-1]+\Delta\beta_{guess}[k]$ |
| Second iteration | $c_{estimated}[k]=(\Delta\psi[k]/T*v_{long}[k]*L_2+\Delta^2\psi[k]/T^2*I_{ZM})/\alpha_2/L*A,$ where $\alpha_2=(\delta_1[k]-arctan(tan(\beta_{estimated}[k])+\Delta\psi[k]/T*L_1/v_{long}[k]))*cos(\delta_1[k])$ |
| Additional calculations | $(a_Y)_{estimated}[k]=(\Delta\psi[k]/T+\Delta\beta_{estimated}[k]/T)*v_{long}$ $(v_{lat})_{estimated}[k]=v_{long}[k]*tan(\beta_{estimated}[k])$ |

In these equations

| | |
|---|---|
| $\Delta$ | is an operand for calculating the difference between the actual and previous signal values, |
| $k$ | marks the step number - the equations represent a discrete system, *[k]* is the actual and *[k-1]* is the previous step, |
| $\beta_{estimated}$ | is the estimated sideslip angle, |
| $\Delta\beta_{guess}$ | is the sideslip angle changing, |
| $\beta_{guess}$ | is the sideslip angle's first try, |
| $c_{estimated}$ | is the mass specific cornering stiffness parameter, |
| $\alpha_1$ | is an angular axle sideslip angle (for first iteration), |
| $\alpha_2$ | is an angular axle sideslip angle (for second iteration), |
| $L$ | is the axle distance, |
| $L_1$ | is the front axle's distance from centre of gravity, |
| $L_2$ | is the rear axle's distance from centre of gravity, |

| | |
|---|---|
| $\Delta\psi/T$ | is the yaw rate, where $T$ is the step time, |
| $\Delta^2\psi/T^2$ | is the yaw acceleration, established with numeric derivation, |
| $I_{ZM}$ | is a mass specific vertical inertia, which is derived from axle distance and track width, |
| $v_{long}$ | is the longitudinal vehicle velocity, |
| $\delta_1$ | is the front axle's steered wheel angle, |
| $B_{min}, B_{max}$ | are limit values, |
| $A$ | is a gain for sensitivity tuning, |
| $(a_Y)_{estimated}$ | is estimated lateral acceleration parallel to road surface, |
| $(v_{lat})_{estimated}$ | is estimated lateral vehicle velocity. |

In the first iteration, initial vehicle sideslip angle changing $\Delta\beta_{guess}$ is calculated with the using of a mass specific cornering stiffness parameter $c_{estimated}$ from the previous step, an angular axle sideslip angle $\alpha_1$, axle distance $L$, rear axle's distance from centre of gravity $L_2$ (it is an optional parameter, without further definition it is treated as the half of the axle distance), yaw rate $\Delta\psi/T$ (where $T$ is the step time, and yaw acceleration $\Delta^2\psi/T^2$ is established with numeric derivation), a mass specific vertical inertia $I_{ZM}$ (which is derived from axle distance and track width) and longitudinal vehicle velocity $v_{long}$. The angular axle sideslip angle $\alpha_1$ requests furthermore the front axle's steered wheel angle $\delta_1$, the previous estimated vehicle sideslip angle and front axle's axle distance from centre of gravity $L_1$ (according to $L$ and $L_2$).

During the regulation, with the previous step's estimated vehicle sideslip angle and the supposed initial vehicle sideslip angle changing together $\beta_{guess}$ and with further minimizing, maximizing functions and limit values $B_{min}, B_{max}$ an actual estimated vehicle sideslip angle $\beta_{estimated}$ is calculated. The limit values depend on the first iteration's variables and determine what the actual limits of vehicle sideslip angle can be in case of the expected highest and lowest cornering stiffness parameters or considering simple kinematics. These parameters are vehicle independents; they are building on a typical tire's mass specific lateral characteristics on dry asphalt and ice surface.

Finally, the second iteration actualizes the mass specific cornering stiffness parameter $c_{estimated}$ with the actualized estimated vehicle sideslip angle $\beta_{estimated}$ in the angular axle sideslip angle $\alpha_2$. The other used parameters are similar as in case of the first iteration, except one more parameter: A hand-tuned gain $A$. The role of this parameter to set the sensitivity of the estimation - a bigger than 1 gain results a less sensitive estimation method that will approach always the expected highest cornering stiffness parameters resulted vehicle sideslip angle.

In the following, an example of the estimation method is given by the following steps:

1. With the start of the estimation, an initial estimated vehicle sideslip angle $\beta_{estimated}[0]$ and estimated mass specific cornering stiffness parameter $c_{estimated}[0]$ are set. The method tunes these variables in a short time, thus initial values are not important.

2. First iteration calculates an initial guess of the vehicle sideslip angle changing $\Delta\beta_{guess}[1]$ from 1st point's initial values and the used measured values (longitudinal velocity $v_{long}[1]$, yaw rate $\Delta\psi[1]/T$ and acceleration $\Delta^2\psi[1]/T^2$, and front axle's steered wheel angle $\delta_1[1]$).

3. Regulation summarizes, by using the variables according to numeral 1 and numeral 2, the initial estimated vehicle sideslip angle $\beta_{estimated}[0]$ and the initial guess of the vehicle sideslip angle changing $\Delta\beta_{guess}[1]$ and performs a regulation method to calculate the actualized estimated vehicle sideslip angle $\beta_{estimated}[1]$.

4. Second iteration calculates from the actualized estimated vehicle sideslip angle $\beta_{estimated}[1]$ and measured values according to numeral 2 an actualized mass specific cornering stiffness parameter $c_{estimated}[1]$. With this, the first calculation step of the whole estimation method is done.

5. With the first iteration, an actualized guess of vehicle sideslip angle changing $\Delta\beta_{guess}[2]$ is calculated again. For this the actual measured variables (longitudinal velocity $v_{long}[2]$, yaw rate $\Delta\psi[2]/T$ and acceleration $\Delta^2\psi[2]/T^2$, and front axle's steered wheel angle $\delta_1[2]$ and previous mass specific estimated cornering stiffness parameter $c_{estimated}[1]$ are used.

6. With regulation an actualized estimated vehicle sideslip angle $\beta_{estimated}[2]$ is calculated again. For this, the actual measured variables of numeral 5, previous estimated vehicle sideslip angle $\beta_{estimated}[1]$ and actual guess of vehicle sideslip angle changing are used $\Delta\beta_{guess}[2]$.

7. With second iteration, an actualized cornering stiffness parameter $c_{estimated}[2]$ is calculated again. For this, the actual measured variables of numeral 5 and actual estimated vehicle sideslip angle $\beta_{estimated}[2]$ are used. With this, the second calculation step of the whole estimation method is done.

8. Repeat steps according to numerals 5-7.

The result of the iterations and the constraints are the estimated vehicle sideslip angle $\beta_{gestimated}$ and, additionally, the estimated lateral acceleration parallel to the road surface $(a_Y)_{estimated}$ and the estimated lateral vehicle velocity $(v_{lat})_{estimated}$. These parameters do not have an influence on the estimation method, but they are also delivered by this method.

Thus, the invention relates to a method for estimating a vehicle's, or, in a vehicle trailer combination having a tractor vehicle and a towed trailer, a tractor vehicle's sideslip angle, the method comprising the steps of:

a) Gaining the following vehicle parameters from the vehicle: Axle distance, track width, rolling tire radiuses, and steering wheel angle,
b) measuring signals for the longitudinal velocity, the steering wheel angle and the yaw rate of the vehicle, where
c) the method for estimating operates with two iterations in each processing step, where a processing step is done by a vehicle's onboard integrated processing unit in real time, where

c1) a first iteration estimates the vehicle sideslip angle's next value on the basis of the gained vehicle parameters and the measured signals,
c2) a second iteration estimates a mass specific cornering stiffness parameter on the basis of the gained vehicle parameters and the measured signals, where
c3) between the two iterations, a regulation method is inserted, which is based on constraints, which are originated from physical laws such as continuity or maximum possible adhesion coefficient, where a first regulation step calculates threshold values for the vehicle sideslip angle that are based on kinematical conditions, and a following regulation step investigates that the continuity of the vehicle sideslip angle can be held or not with the calculated maximum and minimum vehicle sideslip angles, and if yes then saturates the first iteration's result.

Particularly, the

- first iteration is performed according to the following equation:

$$\Delta\beta_{guess}[k]=(c_{estimated}[k-1]*\alpha_1*L-\Delta^2\psi[k]/T^{2}*I_{ZM})/v_{long}[k]/L_2*T-\Delta\psi[k],$$

with $\alpha_1=(\delta_1[k]-arctan(tan(\beta_{estimated}[k-1])+\Delta\psi[k]/T*L_1/v_{long}[k]))*cos(\delta_1[k])$,
- regulation method is performed according to the following equation:

$$\beta_{estimated}[k]=min(max(\beta_{guess}[k],B_{max}),B_{min}),$$

with $\beta g_{uess}[k]=\beta_{estimate}[k-1]+\Delta\beta_{guess}[k]$
- second iteration is performed according to the following equation:

$$c_{estimated}[k]=(\Delta\psi[k]/T*v_{long}[k]*L_2+\Delta^2\psi[k]/T^{2}*I_{ZM})/\alpha_2/L*A,$$

$$\alpha_2=(\delta_1[k]-arctan(tan(\beta_{estimated}[k])+\Delta\psi[k]/T*L_1/v_{long}[k]))*cos(\delta_1[k]),$$

where

| | |
|---|---|
| $\Delta$ | is an operand for calculating the difference between the actual and previous signal values, |
| $k$ | marks the step number - the equations represent a discrete system, *[k]* is the actual and *[k-1]* is the previous step, |
| $\beta_{estimated}$ | is the estimated sideslip angle, |
| $\Delta\beta_{guess}$ | is the sideslip angle changing, |
| $\beta_{guess}$ | is the sideslip angle's first try, |
| $c_{estimated}$ | is the mass specific cornering stiffness parameter, |
| $\alpha_1$ | is an angular axle sideslip angle (for first iteration), |

$\alpha_2$      is an angular axle sideslip angle (for second iteration),

$L$      is the axle distance,

$L_1$      is the front axle's distance from centre of gravity,

$L_2$      is the rear axle's distance from centre of gravity,

$\Delta\psi/T$      is the yaw rate, where $T$ is the step time,

$\Delta^2\psi/T^2$      is the yaw acceleration, established with numeric derivation,

$I_{ZM}$      is a mass specific vertical inertia, which is derived from axle distance and track width,

$v_{long}$      is the longitudinal vehicle velocity,

$\delta_1$      is the front axle's steered wheel angle,

$B_{min}, B_{max}$      are limit values,

$A$      is a gain for sensitivity tuning.

According to a preferred embodiment, during previous programming the vehicle parameters of only the towing vehicle of a vehicle trailer combination is set up.

Further, the longitudinal vehicle velocity is preferably gained on the basis of the wheel speeds of the wheels of the vehicle.

The invention also refers to a device for performing the above described estimation method, having an integrated processing unit with a stored program with an algorithm to perform the method, at least one sensor for measuring wheel speeds, at least one sensor for measuring the steering wheel angle and at least one sensor for measuring the yaw rate.

Description of an embodiment of the invention

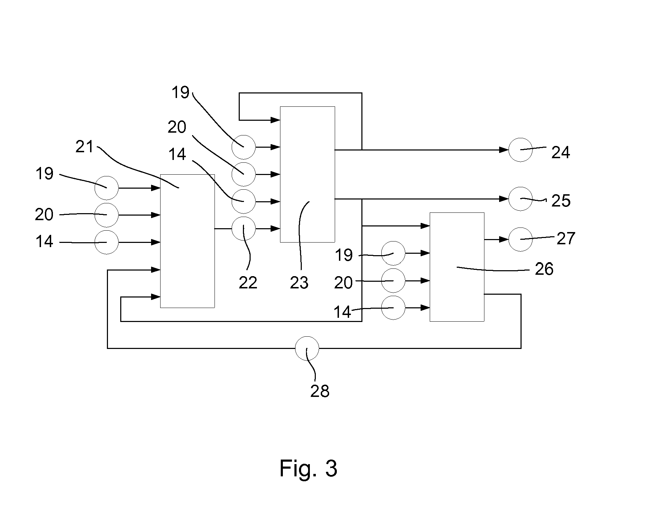

In the drawings, Fig.3 showing a block diagram of the above described estimation method for estimating the side slip angle of a commercial vehicle.

Measured longitudinal vehicle velocity $v_{long}$ 19 is originated from wheel speeds. Measured steered wheel angle 20 is originated from steering wheel angle. Furthermore there is measured yaw rate 14. The first block 21 creates calculations for the estimation method; it outputs a raw value of estimated vehicle sideslip angle $\beta_{guess}$ 22. Further inputs are of this block the final estimated vehicle sideslip angle $\beta_{estimated}$ 25 and a mass specific cornering stiffness parameter $c_{estimated}$ 28. Following block 23 contains the regulation conditions that correct the raw value of estimated vehicle sideslip angle $\beta_{guess}$. These conditions are based on simple physical laws, such as continuity or maximum available grip. Corrections set limit values of estimated vehicle sideslip angle $\beta_{estimated}$. The limits are originated from kinematical conditions and keep the continuity of the estimated vehicle sideslip angle. Block 23 outputs estimated lateral acceleration parallel with road surface value $(a_Y)_{estimated}$ 24 and mentioned corrected vehicle sideslip angle $\beta_{estimated}$ 25. Latter together with the measured inputs go into block 26. This block calculates and outputs the estimated lateral velocity $(v_{lat})_{estimated}$ 27 and a mass specific cornering stiffness parameter $c_{estimated}$ 28. To sum this list: block 21 and block 26 contain two iterations: the first one iterates the vehicle sideslip angle's initial try $\beta_{guess}$, and the second one iterates the mass specific cornering stiffness parameter $c_{estimated}$. Between them, there is the regulation method in block 23, which corrects the first iteration's result.

Thus, the estimation method calculates the estimated values on the basis of measured quantities, the estimation method is suitable for every vehicle type and combination, recognizes adhesion coefficient and any tire type effect, the estimation method is running in real time on the vehicle's onboard computer and the gathered physical quantities are originated only from vehicle.

**Claims**

1. Method for estimating a vehicle's, or, in a vehicle trailer combination having a tractor vehicle and a towed trailer, a tractor vehicle's sideslip angle, the method comprising the steps of:

    a) Gaining the following vehicle parameters from the vehicle: Axle distance, track width, rolling tire radiuses, and steering wheel angle,

    b) Measuring signals for the longitudinal velocity (19), the steering wheel angle (20) and the yaw rate (14) of the vehicle, where

    c) the method for estimating operates with two iterations in each processing step, where a processing step is done by a vehicle's onboard integrated processing unit in real time, where

        c1) a first iteration (21) estimates the vehicle sideslip angle's next value on the basis of the gained vehicle parameters and the measured signals,

c2) a second iteration (26) estimates a mass specific cornering stiffness parameter on the basis of the gained vehicle parameters and the measured signals, where

c3) between the two iterations, a regulation method (23) is inserted, which is based on constraints, which are originated from physical laws such as continuity or maximum possible adhesion coefficient, where a first regulation step calculates threshold values for the vehicle sideslip angle that are based on kinematical conditions, and a following regulation step investigates that the continuity of the vehicle sideslip angle can be held or not with the calculated maximum and minimum vehicle sideslip angles, and if yes then saturates the first iteration's result.

2. Method according to claim 1, where the

a) first iteration is performed according to the following equation:

$$\Delta\beta_{guess}[k]=(c_{estimated}[k-1]*\alpha_1*L-\Delta^2\psi[k]/T^{2*}I_{ZM})/v_{long}[k]/L_2*T-\Delta\psi[k],$$

with $\alpha_1=(\delta_1[k]-arctan(tan(\beta_{estimated}[k-1])+\Delta\psi[k]/T*L_1/v_{long}[k]))*cos(\delta_1[k])$,

b) regulation method is performed according to the following equation:

$$\beta_{estimated}[k]=min(max(\beta_{guess}[k],B_{max}),B_{min}),$$

with $\beta_{guess}[k]=\beta_{estimated}[k-1]+\Delta\beta_{guess}[k]$

c) second iteration is performed according to the following equation:

$$c_{estimated}[k]=(\Delta\psi[k]/T*v_{long}[k]*L_2+\Delta^2\psi[k]/T^{2*}I_{ZM})/\alpha_2/L*A,$$

with

$\alpha_2=(\delta_1[k]-arctan(tan(\beta_{estimated}[k])+\Delta\psi[k]/T*L_1/v_{long}[k]))*cos(\delta_1[k])$, where

$\Delta$ is an operand for calculating the difference between the actual and previous signal values,

$k$ marks the step number - the equations represent a discrete system, $[k]$ is the actual and $[k-1]$ is the previous step,

$\beta_{estimated}$ is the estimated sideslip angle,

$\Delta\beta_{guess}$ is the sideslip angle changing,

$\beta_{guess}$ is the sideslip angle's first try

$c_{estimated}$ is the mass specific cornering stiffness parameter,

$\alpha_1$ is an angular axle sideslip angle,

$\alpha_2$ is an angular axle sideslip angle (for second iteration),

$L$ is the axle distance,

$L_1$ is the front axle's distance from centre of gravity,

$L_2$ is the rear axle's distance from centre of gravity,

$\Delta\psi/T$ is the yaw rate, where $T$ is the step time,

$\Delta^2\psi/T^2$ is the yaw acceleration, established with numeric derivation,

$I_{ZM}$ is a mass specific vertical inertia, which is derived from axle distance and track width,

$v_{long}$ is the longitudinal vehicle velocity,

$\delta_1$ is the front axle's steered wheel angle,

$B_{min}$, $B_{max}$ are limit values,

$A$ is a gain for sensitivity tuning.

3. Method according to claim 1 or 2, **characterized by** setting up during previous programming the vehicle parameters of only the towing vehicle of a vehicle trailer combination.

4. Method according to any of the preceding claims, **characterized by** gaining the longitudinal vehicle velocity on the basis of the wheel speeds of the wheels of the vehicle.

5. Device for performing the estimation method according to any of the foregoing claims, having an integrated processing unit with a stored program with an algorithm to perform the method, at least one sensor for measuring wheel speeds, at least one sensor for measuring the steering wheel angle and at least one sensor for measuring the yaw rate.

**Patentansprüche**

1. Verfahren zur Schätzung eines Schwimmwinkels eines Fahrzeugs oder des Schwimmwinkels bei einer Gespannkombination bestehend aus Zugfahrzeug und Anhänger, wobei das Verfahren die folgenden Schritte umfasst:

a) Erfassung der folgenden Fahrzeugparameter von dem Fahrzeug: Achsabstand, Spurbreite, Radien der sich drehenden Reifen und Lenkradwinkel,
b) Messung von Signalen für die Geschwindigkeit in Längsrichtung (19), für den Lenkradwinkel (20) und für die Gierrate (14) des Fahrzeugs, wobei
c) das Schätzverfahren mit zwei Wiederholungen in jedem Verarbeitungsschritt arbeitet, und wobei

c1) in einer ersten Wiederholung (21) anhand der erfassten Fahrzeugparameter und der gemessenen Signale der nächste Wert des Schwimmwinkels des Fahrzeugs geschätzt wird,
c2) in einer zweiten Wiederholung (26) ein massenspezifischer Parameter für die Quersteifigkeit geschätzt wird, wobei
c3) zwischen die beiden Wiederholungen ein Regulierungsverfahren (23) zwischengeschaltet ist, dem Einschränkungen zugrunde liegen, die aus physikalischen Gesetzen wie Kontinuität oder größtmöglichem Kraftschlussbeiwert stammen, wobei in einem ersten Regulierungsschritt Schwellwerte für den Schwimmwinkel des Fahrzeugs berechnet werden, denen kinematische Bedingungen zugrunde liegen, und in einem nachfolgenden Regulierungsschritt untersucht wird, ob die Kontinuität des Schwimmwinkels des Fahrzeugs bei den berechneten größtmöglichen und kleinstmöglichen Schwimmwinkeln des Fahrzeugs beibehalten werden kann, und wenn dies der Fall ist, dann liegt Entsprechung zum Ergebnis aus der ersten Wiederholung vor.

2. Verfahren nach Anspruch 1, bei welchem

a) die erste Wiederholung in Entsprechung zur folgenden Gleichung durchgeführt wird:

$$\Delta\beta_{guess}[k] = (c_{estimated}[k-1]*\alpha_1*L-\Delta^2\Psi[k]/T^2*I_{ZM}) / v_{long}[k] / L_2*T - \Delta\Psi[k]$$

in welcher

$$\alpha_1=(\delta_1[k]-\arctan(\tan(\beta_{estimated}[k-1])+ \Delta\Psi[k] / T*L_1/v_{long}[k]))*\cos(\delta_1[k]),$$

b) wobei das Regelverfahren in Entsprechung zur folgenden Gleichung durchgeführt wird:

$$\beta_{estimated}[k] = \min(\max(\beta_{guess}[k],B_{max}),B_{min}),$$

in welcher $\beta_{guess}[k] = \beta_{estimated}[k-1] + \Delta\beta_{guess}[k]$
c) wobei die zweite Wiederholung in Entsprechung zur folgenden Gleichung durchgeführt wird:

$$c_{estimated}[k] = (\Delta\Psi[k] / T* v_{long}[k] * L_2 + \Delta^2\Psi[k] / T^2*I_{ZM}) / \alpha_2/L*A$$

in welcher

$\alpha_2 = (\delta_1[k]-\arctan(\tan(\beta_{estimated}[k])+ \Delta\Psi[k] / T*L_1/v_{long}[k]*\cos(\delta_1[k]),$ wobei
$\Delta$ ein Operand zur Berechnung der Differenz zwischen dem Wert des augenblicklichen Signals und dem Wert des vorherigen Signals ist,

*k* die Nummer des Schritts angibt - die Gleichungen stellen dabei ein diskretes System dar - wobei *[k]* den augenblicklichen Schritt bezeichnet und *[k-1]* der vorherige Schritt ist,

$\beta_{estimated}$ der geschätzte Schwimmwinkel ist,

$\Delta\beta_{guess}$ die Änderung des Schwimmwinkels ist,

$\beta_{guess}$ der erste Versuch des Schwimmwinkels ist,

$c_{estimated}$ der massenspezifische Parameter für die Quersteifigkeit ist,

$\alpha_1$ ein winkelförmiger Schwimmwinkel ist,

$\alpha_2$ ein winkelförmiger Schwimmwinkel (für die zweite Wiederholung) ist,

*L* den Achsabstand bezeichnet,

$L_1$ den Abstand der Vorderachse vom Schwerpunkt angibt,

$L_2$ den Abstand der Hinterachse vom Schwerpunkt angibt,

$\Delta\Psi/T$ die Gierrate ist, wobei *T* die Schrittzeit angibt,

$\Delta^2\Psi/T^2$ die mit numerischer Ableitung ermittelte Gierbeschleunigung angibt,

$I_{ZM}$ eine massenspezifische Trägheit in vertikaler Richtung bezeichnet, die aus dem Achsabstand und der Spurbreite abgeleitet wird,

$v_{long}$ die Fahrzeuggeschwindigkeit in Längsrichtung angibt,

$\delta_1$ der Winkel des gelenkten Rades an der Vorderachse ist,

$B_{min}$, $B_{max}$ Grenzwerte sind, und

*A* ein Verstärkungsfaktor für die Feinabstimmung der Empfindlichkeit ist.

3. Verfahren nach Anspruch 1 oder 2, **gekennzeichnet durch** die Einstellung der Fahrzeugparameter nur des Zugfahrzeugs in einer Gespannkombination während der vorhergehenden Programmierung.

4. Verfahren nach einem der vorhergehenden Ansprüche, **gekennzeichnet durch** Erhöhung der Fahrzeuggeschwindigkeit in Längsrichtung anhand der Raddrehzahlen der Räder des Fahrzeugs.

5. Vorrichtung zur Durchführung des Schätzverfahrens nach einem der vorhergehenden Ansprüche, welche eine integrierte Verarbeitungseinheit mit einem darin abgespeicherten Programm mit einem Algorithmus zur Durchführung des Verfahrens, mindestens einen Messfühler zum Messen des Lenkradwinkels und mindestens einen Messfühler zum Messen der Gierrate aufweist.

**Revendications**

1. Procédé d'estimation d'un angle de dérapage d'un véhicule ou de l'angle de dérapage dans un ensemble routier composé d'un véhicule tracteur et une remorque, ce procédé comprenant les étapes suivantes :

   a) saisie des paramètres de véhicule suivants : écartement des axes, largeur de piste, rayons des roues tournantes et angle du volant,

   b) mesure de signaux de la vitesse en sens longitudinal (19), de l'angle du volant (20) et de la vitesse de lacet (14) du véhicule,

   c) le procédé d'estimation fonctionnant en deux itérations dans chaque étape de traitement, et

   c1) au cours d'une première itération (21), à estimation de la prochaine valeur de l'angle de dérapage du véhicule se faisant au regard des paramètres de véhicule saisis et des signaux mesurés,

   c2) au cours d'une deuxième itération (26) à estimation d'un paramètre de taux spécifique, rapporté à la masse, pour la rigidité transversale et dans lequel

   c3) une étape de régulation (23) est interposée entre les deux itérations, qui se fonde sur des restreintes à origine dans des lois physique, comme la continuité ou la valeur maximale du coefficient d'adhérence, au calcul, dans une première étape de régulation, des valeurs de seuil de l'angle de dérapage du véhicule, qui se fondent sur des conditions cinématiques, et à une analyse, dans une étape de régulation suivante, afin d'établir si la continuité de l'angle de dérapage du véhicule peut être maintenue aux angles de dérapage maximales et minimales calculés du véhicule, et quand cela est le cas, il y a une correspondance avec le résultat de la première itération.

2. Procédé selon la revendication 1, dans lequel

   a) la première itération se fait en correspondance avec l'équation suivante :

$$\Delta\beta_{guess}[k] = (c_{estimated}[k-1]*\alpha_1*L-\Delta^2\Psi[k]/T^{2}*I_{ZM}) / v_{long}[k] / L_2*T - \Delta\Psi[k]$$

dans laquelle

$$\alpha_1=(\delta_1[k]-\arctan(\tan(\beta_{estimated}[k-1])+ \Delta\Psi[k] / T*L_1/v_{long}[k]))*\cos(\delta_1[k]),$$

b) dans lequel le procédé de régulation se fait en correspondance avec l'équation suivante :

$$\beta_{estimated}[k] = \min(\max(\beta_{guess}[k],B_{max}),B_{min}),$$

dans laquelle $\beta_{guess}[k] = \beta_{estimated}[k-1] + \Delta\beta_{guess}[k]$

c) dans lequel la deuxième itération se fait en correspondance avec l'équation suivante :

$$c_{estimated}[k] = (\Delta\Psi[k] / T* v_{long}[k] * L_{2\,+}\Delta^2\Psi[k] / T^{2}*I_{ZM}) / \alpha_2/L*A$$

dans laquelle :

$$\alpha_2 = (\delta_1[k]-\arctan(\tan(\beta_{estimated}[k])+ \Delta\Psi[k] / T*L_1/v_{long}[k]))*\cos(\delta_1[k]),$$

où :

$\Delta$ est un opérande pour le calcul de la différence entre la valeur du signal instantané et de la valeur du signal précédent,

$k$ indique le nombre de l'étape - les équations sont un système discrète - dans laquelle $[k]$ représente l'étape instantanée et $[k-1]$ indique l'étape précédente,

$\beta_{estimated}$ est l'angle de dérapage estimé,

$\Delta\beta_{guess}$ indique la variation de l'angle de dérapage,

$\beta_{guess}$ représente le premier essai de l'angle de dérapage,

$c_{estimated}$ représente le paramètre de taux spécifique, rapporté à la masse, pour la rigidité transversale,

$\alpha_1$ représente un angle de dérapage angulaire,

$\alpha_2$ représente un angle de dérapage angulaire (pour la deuxième itération),

$L$ indique l'écartement des axes,

$L_1$ correspond à la distance de l'essieu avant du centre de gravité,

$L_2$ correspond à la distance de l'essieu arrière du centre de gravité,

$\Delta\Psi/T$ indique la vitesse de lacet, au $T$ représentant le temps d'étape,

$\Delta^2\Psi/T^2$ représente l'accélération de lacet établie par dérivation numérique,

$I_{ZM}$ indique une inertie spécifique, rapportée à la masse, en sens vertical, qui est dérivée de l'écartement des axes et de la largeur de piste,

$v_{long}$ représente la vitesse du véhicule en sens longitudinal,

$\delta_1$ est l'angle de la roue dirigée à l'essieu avant,

$B_{min}$, $B_{max}$ sont des valeurs de limite, et

$A$ est un facteur de gain pour le réglage fin de la sensibilité.

3. Procédé selon la revendication 1 ou 2, **caractérisé par** le réglage des paramètres de véhicule seuls du véhicule tracteur dans un ensemble routier au cours de la programmation précédente.

4. Procédé selon une quelconque des revendications précédentes, **caractérisé par** l'augmentation de la vitesse du véhicule en sens longitudinal en regard de la vitesse de rotation de roue aux roues du véhicule.

5. Dispositif à réaliser le procédé d'estimation selon une quelconque des revendications précédentes, qui comprend une unité de traitement intégrée à un programme mis en son mémoire, à un algorithme pour la réalisation du procédé, au moins une sonde pour la mesure de l'angle du volant et au moins une sonde pour la mesure de la vitesse de lacet.

Fig.1

Fig. 2

Fig. 3

**EP 2 684 753 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- DE 102005060820 A1
- DE 10338879 A1
- US 2002143451 A